# EUROPÄISCHE PATENTSCHRIFT

(11) **EP 4 544 364 B1**
(45) Veröffentlichungstag und Bekanntmachung des Hinweises auf die Patenterteilung: **27.08.2025**
(21) Anmeldenummer: 23750955.9
(22) Anmeldetag: 27.07.2023
(51) Int. Cl.: G05B 19/042

(54) **AUTOMATISIERUNGSSYSTEM**
AUTOMATION SYSTEM
SYSTÈME D'AUTOMATISATION

(30) Priorität: 02.08.2022 DE 102022119309
(43) Veröffentlichungstag der Anmeldung: 30.04.2025
(73) Patentinhaber: Beckhoff Automation GmbH, 33415 Verl (DE)
(72) Erfinder: PAPENFORT, Josef, 32609 Hüllhorst (DE); MERSCH, Henning, 33415 Verl (DE)
(74) Vertreter: Patentanwaltskanzlei WILHELM & BECK
(86) Internationale Anmeldenummer: PCT/EP2023/070889
(87) Internationale Veröffentlichungsnummer: WO 2024/028207

(56) Entgegenhaltungen:
- WO-A1-03/090084
- DE-A1- 102018 102 067
- DE-A1- 102020 127 804

## Beschreibung

Die Erfindung betrifft ein Automatisierungssystem.

Diese Patentanmeldung beansprucht die Priorität der deutschen Patentanmeldung DE 10 2022 119 309.8.

In der Automatisierungstechnik werden oft Netzwerksysteme eingesetzt, bei denen die dezentral angeordneten Geräte einer Maschinenperipherie wie E/A-Module, Messumformer, Antriebe, Ventile und Bedienerterminals mit Automatisierungs-, Engineerings- oder Visualisierungssystemen kommunizieren. Alle Busteilnehmer sind dabei über einen Feldbus, in der Regel einen seriellen Feldbus, miteinander verbunden, wobei der Datenaustausch über den Feldbus oft auf der Grundlage einer hierarchischen Server-Client-Zugriffsverwaltung in Form von Datagrammen, auch als Telegramme bezeichnet, ausgeführt wird.

Die Server-Einheiten am Feldbus, in der Regel die Steuergeräte, sind im Besitz einer Buszugriffsberechtigung und bestimmen den Datentransfer. Die Client-Einheiten am Feldbus, in der Regel Maschinengeräte, haben keine Buszugriffsberechtigung, d. h. sie dürfen empfangene Telegramme nur quittieren oder auf Anforderung der Server-Einheiten Telegramme übermitteln. Die Telegramme setzen sich aus Steuerdaten und Nutzdaten zusammen. Als Protokoll zum Steuern des Datenaustausches auf dem Feldbus wird im Allgemeinen der Ethernet-Standard verwendet, der Telegramme mit einer Länge von bis zu 1500 Byte bei einer gleichzeitig hohen Übertragungsgeschwindigkeit von bis zu 10 Gbit/sec ermöglicht.

Der Feldbus des Automatisierungssystems ist oft als Ringstruktur ausgelegt, bei der die einzelnen Client-Einheiten am Übertragungsweg zu einer Linie zusammengeschlossen sind, wobei jeder Busteilnehmer mit zwei Nachbarn und der erste und der letzte Busteilnehmer im Ring mit der Server-Einheit verbunden ist.

Eine Anforderung an ein Server-Client-Automatisierungssystem, insbesondere beim Einsatz in der Fertigungs- und Prozessautomatisierung, ist eine hohe Fehlertoleranz. Ein Fehler im Automatisierungssystem, der dabei ohne Schaden überstanden werden muss, ist der Ausfall der Server-Einheit.

In den Automatisierungssystemen ist deshalb oft eine weitere Ersatz-Server-Einheit vorgesehen. Die EP 3 072 262 B1 beschreibt ein solches Automatisierungssystem mit zwei identischen Server-Einheiten. Beim Ausfall der einen Server-Einheit kann die andere Server-Einheit die Steuerung des Automatisierungssystems übernehmen. Das Ausbilden einer redundanten Steuerung im Automatisierungssystem mit zwei identischen Server-Einheiten ist jedoch aufwändig und kostspielig. Abhängig von der vom Automatisierungssystem gesteuerten Maschine kann es beim Ausfall der Server-Einheit auch ausreichen, anstatt den vollen Funktionsumfang der Maschine aufrechtzuerhalten, die Maschine in einen sicheren Zustand überzuführen.

Ein Automatisierungssystem mit den Merkmalen des ersten Teils von Anspruch 1 ist aus der DE 10 2020 127 804 A1 bekannt.

Aufgabe der Erfindung ist es, ein Automatisierungssystem bereitzustellen, bei dem der Ausfall der Server-Einheit zuverlässig erkannt und die vom Automatisierungssystem gesteuerte Maschine dann ggfs. mit reduziertem Funktionsumfang weiterbetrieben wird.

Diese Aufgabe wird mit einem Automatisierungssystem gemäß Anspruch 1 gelöst. Bevorzugte Weiterbildungen sind in den abhängigen Ansprüchen angegeben.

In einem Automatisierungssystem sind eine Mehrzahl von Busteilnehmern über einen Feldbus miteinander verbunden, um Telegramme mit einer vorgegebenen Datenstruktur zwischen den Busteilnehmern auszutauschen. Die Busteilnehmer umfassen eine Haupt-Server-Einheit, eine Ersatz-Server-Einheit und wenigstens eine Client-Einheit. In einem Normal-Betriebsmodus tauschen die Haupt-Server-Einheit und die Client-Einheit Normal-Telegramme mit einer vorgegebenen Nutzdatenstruktur aus. Die Ersatz-Server-Einheit ist ausgelegt, die zwischen der Haupt-Server-Einheit und der Client-Einheit ausgetauschten Normal-Telegramme zu empfangen. Dabei wird die Funktionsfähigkeit der Haupt-Server-Einheit fortlaufend überwacht. Wenn ein Ausfallereignis der Haupt-Server-Einheit erkannt wird, ist die Ersatz-Server-Einheit ausgelegt, einen Ausfall-Betriebsmodus zu aktivieren, wobei in dem Ausfall-Betriebsmodus die Ersatz-Server-Einheit und die Client-Einheit Ausfall-Telegramme austauschen. In den Ausfall-Telegrammen ist die vorgegebene Nutzdatenstruktur der Normal-Telegramme in relevante Datenelemente und optionale Datenelemente unterteilt. Die Ersatz-Server-Einheit ist ausgelegt, für die relevanten Datenelemente des ersten Ausfall-Telegramms die Datenwerte der relevanten Datenelemente des aktuell vorliegenden Normal-Telegramms und für die optionalen Datenelemente des ersten Ausfall-Telegramme vorgegebene Default-Datenwerte zu verwenden. Default-Datenwerte können dabei beispielsweise Erwartungswerte sein und vom Bediener vorgegeben werden.

Mit einem solchen Server-Client-Automatisierungssystem kann insbesondere beim Einsatz in der Fertigungs- und Prozessautomatisierung eine hohe Fehlertoleranz erreicht werden. Der Ausfall der Haupt-Server-Einheit wird ohne Schaden überstanden, da die weitere Ersatz-Server-Einheit die Steuerung des Automatisierungssystems übernimmt. Als Ersatz-Server-Einheit kann dann aber eine kleinere Server-Einheit und/oder eine Ersatz-Server-Einheit mit einem einfachen bzw. robusten Steuerprogrammcode eingesetzt werden.

Die Client-Einheit kann im Ausfall-Betriebsmodus einen gegenüber dem Normal-Betriebsmodus veränderten Funktionsumfang aufweisen, wobei der Funktionsumfang der Client-Einheit in dem Ausfall-Betriebsmodus vorzugsweise einen abgesicherten Zustand der Client-Einheit bereitstellt. Für den Ausfall-Betriebsmodus werden grundsätzlich dann weniger Eingangsdaten von den Sensoren der Maschine benötigt als für den Normal-Betriebsmodus. Ferner ist im Ausfall-Betriebsmodus auch der Ausgangsdatensatz für die Aktoren der Maschine reduziert.

Ein Steuerprogrammcode der Ersatz-Server-Einheit unterscheidet sich wenigstens in Teilen von einem Steuerprogrammcode der Haupt-Server-Einheit. Damit kann verhindert werden, dass ein Programmierfehler in der Steuerungsaufgabe der Haupt-Server-Einheit dazu führt, dass nach Ausfall der Haupt-Server-Einheit auch die Ersatz-Server-Einheit ausfällt. Der Steuerprogrammcode auf der Haupt-Server-Einheit kann dann auch ohne Weiteres getauscht werden.

Die Ersatz-Server-Einheit weist ein Repository mit einer Mehrzahl von Ausfall-Betriebsmodi auf, wobei die Ersatz-Server-Einheit ausgelegt ist, beim Aktivieren des Ausfall-Betriebsmodus den Ausfall-Betriebsmodus aus der Mehrzahl von Ausfall-Betriebsmodi auf der Grundlage der Datenwerte der relevante Datenelemente des aktuell vorliegenden Normal-Telegramms und/oder einer fortlaufend von der Haupt-Server-Einheit an die Ersatz-Server-Einheit übermittelten Zustandsinformation auszuwählen. Auf diese Weise kann schnell der optimale Ausfall-Betriebsmodus für die Client-Einheit abhängig vom Betriebszustand der Client-Einheit bestimmt werden.

Wenn die Ersatz-Server-Einheit nach dem Ausfall der Haupt-Server-Einheit eine Wiederherstellung der Funktionsfähigkeit der Haupt-Server-Einheit erkennt, ist die Ersatz-Server-Einheit ausgelegt, der Haupt-Server-Einheit die relevanten Datenelemente der Ausfall-Telegramme zu übermitteln. Zur Reaktivierung des Normal-Betriebsmodus ist die Haupt-Server-Einheit vorzugsweise ausgelegt, für ein erstes Normal-Telegramm die Datenwerte der relevanten Datenelemente des letzten von der Ersatz-Server-Einheit übermittelten Ausfall-Telegramms zu verwenden. Damit ist eine zuverlässige Wiederaufnahme des Normalbetriebs der Client-Einheit möglich.

Ferner kann die Ersatz-Server-Einheit ausgelegt sein, einen Ausfall der Haupt-Server-Einheit bei einer vorgegebenen Abweichung im Verhalten und/oder vom Normalzustand der Haupt-Server-Einheit anzunehmen. Der Ausfall der Haupt-Server-Einheit kann so frühzeitig erkannt werden. Um Gefahrensituationen abzufangen, übernimmt die Ersatz-Server-Einheit den Betrieb und sorgt für einen sicheren Zustand.

Die Erfindung wird anhand der beigefügten Figuren näher erläutert. Hierbei zeigen:
Fig. 1 schematisch den Aufbau eines Automatisierungssystems mit zwei Server-Einheiten;
Fig. 2 schematisch den Aufbau eines Automatisierungssystems mit zwei Server-Einheiten und einem als Ringstruktur ausgeführten Feldbus;
Fig. 3A einen Normal-Betriebsmodus bei dem in Fig. 2 gezeigten Automatisierungssystem;
Fig. 3B einen Ausfall-Betriebsmodus bei dem in Fig. 2 gezeigten Automatisierungssystem; und
Fig. 4 eine Ablaufschema beim Wechsel zwischen Normal-Betriebsmodus und Ausfall-Betriebsmodus bei dem in Fig. 1 gezeigten Automatisierungssystem.

Als Maschinen werden im Weiteren mit mindestens einem Antriebssystem ausgestattete Vorrichtungen verstanden. Dabei umfasst der Begriff Maschine auch Anlagen, die so angeordnet und gesteuert werden, dass sie als einheitliches Ganzes funktionieren.

In der Industrieautomation werden Netzwerke eingesetzt, um verteilt angeordnete Feldgeräte einer Sensor-/Aktor-Ebene mit einer Steuerungsebene zu verbinden. Die Automatisierungssysteme, auch Feldbussysteme genannt, weisen in der Regel einen Feldbus auf, an dem die Busteilnehmer angeschlossen sind. Dabei können verschiedene Feldbuskonzepte eingesetzt werden, die sich in Bezug auf die Verbindungsstruktur, den Feldbuszugang und das Feldbusprotokoll unterscheiden.

Das Feldbusprotokoll legt fest, wie der Datenaustausch zwischen den Busteilnehmern am Feldbus durchgeführt werden soll. Dabei bestimmt das Feldbusprotokoll die Regeln und Formate für das Kommunikationsverhalten der Busteilnehmer. Der vom Feldbusprotokoll festgelegte Nachrichtenaufbau enthält alle für den Datenaustausch wichtigen Informationen, wie Absender und Empfänger, Nachrichtentyp, Nachrichtengröße und Prüfsumme zum Nachvollziehen einer fehlerfreien Übertragung. Diese Informationen werden als Steuerdaten den Nutzdaten in der Nachricht als Header vorangestellt und/oder den Nutzdaten in der Nachricht als Trailer angehängt.

Als Basisprotokoll im Feldbus wird häufig das Ethernet-Protokoll eingesetzt. Das Ethernet-Protokoll unterteilt die zu übertragenden Daten in sogenannte Frames, deren Aufbau im Standard IEEE 802.3 festgelegt ist. Dem eigentlichen Ethernet-Frame sind eine Präambel und ein Startbit, das sogenannte Start Frame Delimiter SFD, vorgeschaltet. Daran schließt sich dann das eigentliche Ethernet-Telegramm an. Das Ethernet-Telegramm setzt sich aus einem Kopfabschnitt, dem Header, einem Nutzdatenblock und einem Endabschnitt, dem Trailer zusammen.

Der Header startet mit einem 6-Byte-Feld für die Zieladresse, an das sich ein weiteres 6-Byte-Feld mit der Quelladresse anschließt. Dann kann ein weiteres 6-Byte-Feld, das sogenannte Tag-Feld, mit zusätzlichen Steuerdaten im Header folgen, das insbesondere Priorisierungsinformationen enthält. Der Header schließt mit einem 2-Byte-Feld, dem sogenannte Type-Feld, ab, das Auskunft über das Feldbus-Protokoll gibt, mit dem die Daten im Nutzdatenblock zu verarbeiten sind.

Der sich an den Header anschließende Nutzdatenblock kann eine Länge von 1500 Bytes aufweisen, wobei in verschiedenen Ethernet-Protokoll-Erweiterungen auch größere Datenblöcke erlaubt sein können. Der Nutzdatenblock kann von dem sogenannten PAD-Feld (Padding-Bits-Feld) abgeschlossen werden, um die festlegte Mindestlänge des Ethernet-Frames zu garantieren.

An den Nutzdatenblock schließt der Trailer an, der ein 6-Byte-Feld mit einer Prüfsumme aufweist. Wenn ein Ethernet-Telegramm erstellt wird, wird eine CRC-Berechnung über die Bitfolge durchgeführt und die Prüfsumme an den Nutzdatenblock angehängt. Der Empfänger führt nach dem Empfang die gleiche Berechnung aus. Stimmt die empfangene Prüfsumme nicht mit der selbst berechneten Prüfsumme überein, geht der Empfänger von einer fehlerhaften Übertragung aus. Das Ethernet-Telegramm wird dann verworfen.

Der Einsatz des Ethernet-Standards in der Industrieautomation ermöglicht es, insbesondere Echtzeitlösungen bereitzustellen. Echtzeitfähige Feldbussysteme, die auf dem Ethernet-Standard basieren, sind beispielsweise PROFINET, EtherCAT, Powerlink oder SERCOS III. Das jeweils eingesetzte Feldbusprotokoll wird dabei als Type-Feld im Header des Ethernet-Frames angezeigt. Statt dem Ethernet-Standard können in Automatisierungssystemen jedoch auch andere Feldbus-Protokolle, wie beispielsweise das CANopen, Interbus oder Profibus eingesetzt werden.

Automatisierungssysteme werden in der Regel mit einer Server-Client-Struktur betrieben. Die Server-Einheiten im Automatisierungssystem sind die aktiven Busteilnehmer und besitzen eine Buszugriffsberechtigung, um den Telegramm-Verkehr auf dem Feldbus zu bestimmen. Die Server-Einheiten bilden die Steuerungsebene im Automatisierungssystem. Die Client-Einheiten sind passive Busteilnehmer, die keine Buszugriffsberechtigung besitzen und nur auf Anforderungen durch die Server-Einheiten Daten übermitteln dürfen. Die Client-Einheiten sind in der Regel Maschinenperipheriegeräte, wie zum Beispiel E/A-Geräte, Ventile, Antriebe und Messumformer.

Automatisierungssysteme mit einer Server-Client-Struktur sind oft so ausgelegt, dass die einzelnen Client-Einheiten über das Übertragungsmedium zu einer Kette zusammengeschlossen sind, wobei jede Client-Einheit mit zwei Nachbarn, die erste und die letzte Client-Einheit in der Kette dabei mit der Server-Einheit verbunden sind, sodass sich eine Ringstruktur ergibt. Die Datenübertragung in Form von Telegrammen auf dem Feldbus erfolgt dann in eine Richtung ausgehend von der Server-Einheit zur ersten benachbarten Client-Einheit und von dort zur nächsten bis zur letzten Client-Einheit und dann zurück zur Server-Einheit.

Bei Automatisierungssystemen erfolgt die Steuerung in der Regel so, dass die Server-Einheit vorzugsweise zyklisch Steuerungsaufgaben durchführt, um auf der Grundlage von Eingangsdaten von Client-Einheiten Ausgangsdaten für die Client-Einheit zu erzeugen. Ein Ausführung der Steuerungsaufgabe entspricht dabei einem Steuerprozesszyklus.

Die Server-Einheit verschickt dabei nach Abschluss des Steuerprozesszyklus die auf der Grundlage von Eingangsdaten der Client-Einheiten erzeugten Ausgangsdaten als Telegramme auf dem Feldbus. Die Client-Einheiten entnehmen dann bei einer Feldbus-Auslegung in Form einer Ringstruktur beim Durchlauf der Telegramme durch die Client-Einheit aus den Telegrammen die der jeweiligen Client-Einheit zugeordneten Ausgangsdaten, um mit den Ausgangsdaten einen lokalen Client-Einheit-Prozess auszuführen. Die im lokalen Client-Einheit-Prozess ermittelten Daten werden dann von der Client-Einheit in die auf dem Feldbus umlaufenden Telegramme in dafür vorgesehene Bereiche eingetragen. Die Server-Einheit nutzt dann die übertragenen Daten als Eingangsdaten für den nächsten Steuerprozesszyklus.

Eine Anforderung an ein Server-Client-Automatisierungssystem, insbesondere beim Einsatz in der Fertigungs- und Prozessautomatisierung, ist eine hohe Fehlertoleranz. Ein Fehler im Automatisierungssystem, der dabei ohne Schaden überstanden werden muss, ist der Ausfall der Server-Einheit. In dem Automatisierungssystem sind deshalb wenigstens zwei Server-Einheiten vorgesehen, wobei die eine Server-Einheit als Haupt-Server-Einheit und die andere Server-Einheit als Ersatz-Server-Einheit dient. Beim Ausfall der Haupt-Server-Einheit kann dann die weitere Ersatz-Server-Einheit die Steuerung des Automatisierungssystems übernehmen.

Das Automatisierungssystem ist dabei so ausgelegt, dass in einem Normal-Betriebsmodus die Haupt-Server-Einheit mit den Client-Einheiten Normal-Telegramme mit einer vorgegebenen Nutzdatenstruktur austauscht. Die Ersatz-Server-Einheit empfängt die zwischen der Haupt-Server-Einheit und den Client-Einheiten ausgetauschten Normal-Telegramme. Dabei wird die Funktionsfähigkeit der Haupt-Server-Einheit fortlaufend überwacht.

Wenn ein Ausfall der Haupt-Server-Einheit erkannt wird, aktiviert die Ersatz-Server-Einheit einen Ausfall-Betriebsmodus, bei dem dann die Ersatz-Server-Einheit und die Client-Einheiten Ausfall-Telegramme austauschen.

Der Ausfall der Haupt-Server-Einheit kann einen mechanischen Schaden der Maschine zur Folge haben, beispielsweise wenn elek-tronisch gekoppelte Achsen der Maschine ineinander fahren und dabei Teile der Maschine zerstört werden. Um diese Situation abzufangen, übernimmt beim Ausfall der Haupt-Server-Einheit die Ersatz-Server-Einheit den Betrieb der Maschine, wobei die Ersatz-Server-Einheit die Maschine im Ausfall-Betriebsmodus in einen sicheren Zustand überführt.

Der Ausfall-Betriebsmodus kann dabei ein geregeltes "Aus"-Schalten der Maschine, beispielsweise durch Runterrampen der gekoppelten Achsen, sein. Es kann aber auch ein Ausfall-Betriebsmodus mit reduziertem Funktionsumfang ausgeführt werden. So kann beispielsweise in einer Maschine ein Rührwerk mit konstanter Geschwindigkeit weitergedreht werden, um ein Verkleben von Materialien zu unterbinden.

Für den Ausfall-Betriebsmodus werden in der Regel weniger Eingangsdaten von den Sensoren der Maschine benötigt als für den Normal-Betriebsmodus. Ferner kann im Ausfall-Betriebsmodus auch der Ausgangsdatensatz für die Aktoren der Maschine reduziert sein.

In den im Ausfall-Betriebsmodus von der Ersatz-Server-Einheit auf den Feldbus ausgegebenen Ausfall-Telegrammen ist die vorgegebene Nutzdatenstruktur der Normal-Telegramme in relevante Datenelemente und optionale Datenelemente unterteilt, wobei die Ersatz-Server-Einheit ausgelegt ist, für die relevanten Datenelemente des ersten Ausfall-Telegramms die Datenwerte der relevanten Datenelemente des aktuell vorliegenden Normal-Telegramms und für die optionalen Datenelemente des ersten Ausfall-Telegramms vorgegebene Default-Datenwerte zu verwenden.

Vorteilhaft ist es auch, wenn in der Ersatz-Server-Einheit eine andere Programmierung als in der Haupt-Server-Einheit ausgeführt ist. Damit kann verhindert werden, dass ein Programmierfehler in der Steuerungsaufgabe der Haupt-Server-Einheit dazu führt, dass nach Ausfall der Haupt-Server-Einheit auch die Ersatz-Server-Einheit ausfällt. Die Ersatz-Server-Einheit hat dann einen anderen Steuerprogrammcode als die Haupt-Server-Einheit, d.h. der Steuerprogrammcode der Ersatz-Server-Einheit ist nicht gleich oder wenigstens in Teilen nicht gleich dem auf der Haupt-Server-Einheit ausgeführten Steuerprogrammcode. Der Steuerprogrammcode auf der Haupt-Server-Einheit kann so auch ohne Weiteres getauscht werden.

Wenn der Steuerprogrammcode der Haupt-Server-Einheit abstürzt, rettet die Ersatz-Server-Einheit die Maschine physikalisch. Der Steuerprogrammcode auf der Ersatz-Server-Einheit ist dann auch schlanker und weniger komplex im Vergleich zum Steuerprogrammcode der Haupt-Server-Einheit. Der Steuerprogrammcode der Ersatz-Server-Einheit ist ferner besonders sicher ausgelegt und wird intensiv geprüft, um zu gewährleisten, dass der Ausfall-Betriebsmodus der Ersatz-Server-Einheit zuverlässig und fehlerfrei arbeitet.

Der Steuerprogrammcode auf der Ersatz-Server-Einheit kann ein Repository mit einer Mehrzahl von Ausfall-Betriebsmodi besitzen, um auf die unterschiedlichen Situationen, in denen die Ersatz-Server-Einheit die Kontrolle über die Maschine übernehmen soll, mit einem geeigneten Ausfall-Betriebsmodus reagieren zu können. Die Ersatz-Server-Einheit ist dann so ausgelegt, dass beim Aktivieren des Ausfall-Betriebsmodus der Ausfall-Betriebsmodus aus der Mehrzahl von Ausfall-Betriebsmodi auf der Grundlage der Datenwerte der relevante Datenelemente des aktuell vorliegenden Normal-Telegramms und/oder einer fortlaufend von der Haupt-Server-Einheit an die Ersatz-Server-Einheit übermittelten Zustandsinformation ausgewählt wird.

Der Steuerprogrammcode auf der Ersatz-Server-Einheit bezieht im Normal-Betriebsmodus kontinuierlich Nutzdaten von der Haupt-Server-Einheit, um die Maschine beim Ausfall im aktuellen Zustand übernehmen und den Ausfall-Betriebsmodus ausführen zu können. Um den Synchronisierungsvorgang auszuführen, ist die Ersatz-Server-Einheit ausgelegt, die zwischen der Haupt-Server-Einheit und den Client-Einheiten im Normal-Betriebsmodus ausgetauschten Normal-Telegramme mit der vorgegebenen Nutzdatenstruktur zu empfangen.

Der Feldbus wird bei Ausfall der Haupt-Server-Einheit im Ausfall-Betriebsmodus von der Ersatz-Server-Einheit dann weiter mit den Ausfall-Telegrammen beschickt. Dabei ist sichergestellt, dass der Telegramm-Verkehr auf dem Feldbus immer nur von maximal einer Server-Einheit, also der Haupt-Server-Einheit im Normal-Betriebsmodus und der Ersatz-Server-Einheit im Ausfal-Betriebsmodus betrieben wird.

Die Ersatz-Server-Einheit übernimmt beim Ausfall der Haupt-Server-Einheit die Kontrolle über den Telegramm-Verkehr. Die Vorgänge, die als Ausfall der Haupt-Server-Einheit bewertet werden, bei denen die Ersatz-Server-Einheit dann den Ausfall-Betriebsmodus aktiviert, können externe Vorgänge und/ oder interne Vorgänge in Zusammenhang mit der Haupt-Server-Einheit sein.

Die externen Vorgänge können dabei von der Ersatz-Server-Einheit selbst festgestellt werden, d.h. es ist keine Mithilfe der Haupt-Server-Einheit nötig. Die Haupt-Server-Einheit kann beispielsweise aufgrund eines physischen Defekts oder eines Programmabsturzes durch einen Programmierfehler komplett ausfallen. Wenn die Haupt-Server-Einheit kein Normal-Telegramm mehr sendet, erkennt dies die Ersatz-Server-Einheit und startet den Ausfall-Betriebsmodus. Die Ersatz-Server-Einheit kann beispielsweise aber auch einen Temperaturbereich der Haupt-Server-Einheit überwachen, um einen Ausfall einer Klimaanlage in einem Schaltschrank der Haupt-Server-Einheit festzustellen, der dann als Ausfall der Haupt-Server-Einheit gewertet wird. Dabei muss immer sichergestellt sein, dass die Haupt-Server-Einheit auch wirklich abgeschaltet wird, sodass zuverlässig verhindert wird, dass die Ersatz-Server-Einheit und die Haupt-Server-Einheit gleichzeitig die Kontrolle über den Telegramm-Verkehr ausüben.

Die internen Vorgänge zum Auslösen des Ausfall-Betriebsmodus durch die Ersatz-Server-Einheit erfordert, dass die Haupt-Server-Einheit dazu selbst Informationen übermittelt, die dann genutzt werden, um einen Ausfall-Betriebsmodus der Ersatz-Server-Einheit zu triggern. Solche internen Vorgänge, die das Senden einer Ausfall-Information an die Ersatz-Server-Einheit auslösen, können im Steuerprogrammcode der Haupt-Server-Einheit festgelegt sein. Der Steuerprogrammcode der Haupt-Server-Einheit kann, beispielsweise bei einer Zyklusüberschreitung oder wenn der Jitter höher ist als erwartet, anschlagen und dann eine Ausfall-Information an die Ersatz-Server-Einheit schicken.

Auch ein Triggern der Ersatz-Server-Einheit durch eine Selbst-Diagnose der Haupt-Server-Einheit ist möglich. Ein solcher durch Selbst-Diagnose der Haupt-Server-Einheit festgestellter interner Vorgang, der das Senden einer Ausfall-Information an die Ersatz-Server-Einheit auslöst, kann ein Ausfall der Lüftung sein. Auch das in einer Festplatte der Haupt-Server-Einheit integrierte sogenannte S.M.A.R.T.-System, das die Ausfallsicherheit und die Lebensdauer der Festplatte überwacht, kann beispielsweise zum Feststellen, ob ein Ausfallereignis der Haupt-Server-Einheit vorliegt, herangezogen werden. Ferner kann eine Bewertung der Ressourcen-Auslastung der Haupt-Server-Einheit als zu hoch ausfallen, beispielsweise weil der Arbeitsspeicher zu mehr als 95% ausgelastet oder die Festplatte zu mehr als 95% voll ist, und so ein Triggern des Ausfall-Betriebsmodus der Ersatz-Server-Einheit durch die Haupt-Server-Einheit bewirken.

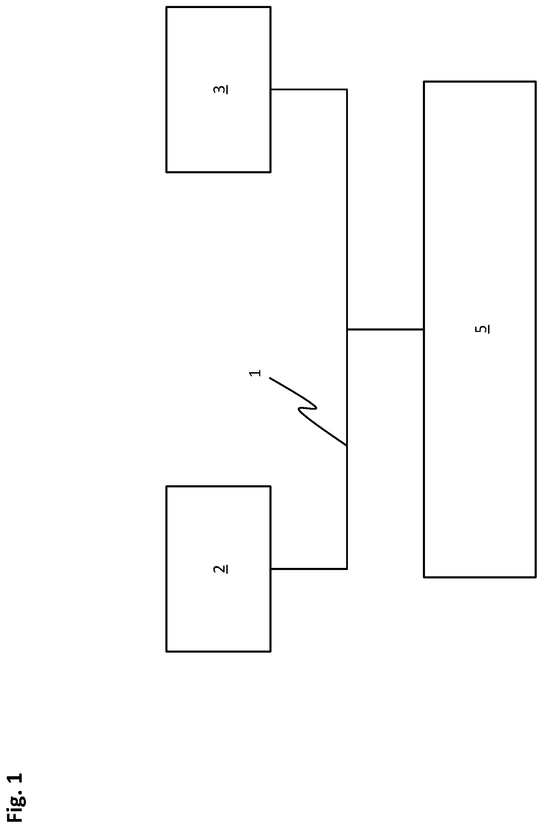

Figur 1 zeigt den prinzipiellen Aufbau eines Automatisierungssystems mit zwei Server-Einheiten. Das Automatisierungssystem weist einen Feldbus 1 auf, der als Übertragungsweg beispielsweise eine elektrische Leitung, einen Lichtleiter oder auch ein Funkstrecke sein kann. An dem Feldbus 1 sind als Busteilnehmer eine Haupt-Server-Einheit 2, eine Ersatz-Server-Einheit 3 und Client-Einheiten 5 einer Maschine angeschlossen. Die Haupt-Server-Einheit 2, die Ersatz-Server-Einheit 3 sowie Client-Einheiten 5 der Maschine können dabei direkt mit dem Übertragungsweg des Feldbusses 1 oder über einen zwischengeschalteten Interface-Baustein verbunden sein.

Der Feldbus 1 des Automatisierungssystems kann dabei als Ringstruktur ausgelegt sein, bei der die einzelnen Client-Einheiten 5 der Maschine am Übertragungsweg zu einer Linie zusammengeschlossen sind, wobei jede Client-Einheit 5 mit zwei Nachbarn und die erste Client-einheit 5-1 und die n-te Client-Einheit 5-N im Ring mit der Haupt-Server-Einheit 2 bzw. der Ersatz-Server-Einheit 3 verbunden sind.

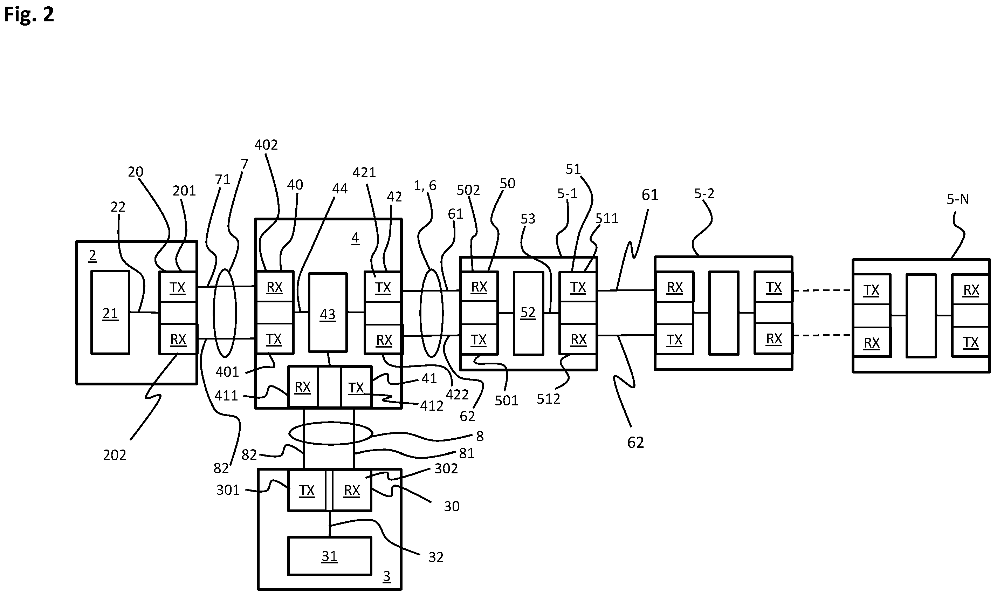

Um mit einem geringen zusätzlichen Hardwareaufwand zwischen der Haupt-Server-Einheit 2 und der Ersatz-Server-Einheit 3 umzuschalten, sind die Haupt-Server-Einheit 2 und die Ersatz-Server-Einheit 3 über einen Verteiler 4 (siehe Fig. 2) mit dem als Ringstruktur ausgeführten Feldbus 1 verbunden.

Fig. 2 zeigt schematisch den möglichen Aufbau eines solchen Automatisierungssystems. Das Automatisierungssystem weist eine Haupt-Server-Einheit 2 und eine Ersatz-Server-Einheit 3, einen Verteiler 4 und eine Mehrzahl von Client-Einheiten 5, die als erste Client-Einheiten 5-1, zweite Client-Einheit 5-2, ..., X-te Client-Einheit 5-X, ..., 5-N nummeriert sind, auf, wobei X eine ganze Nummer gleich oder größer 1 bis N ist, wobei N ist die gesamte Nummer von Client-Einheiten.

Die Haupt-Server-Einheit 2 und die Ersatz-Server-Einheit 3 besitzen den gleichen Grundaufbau, sind aber unterschiedlichen Einheiten. Die Haupt-Server-Einheit 2 weist eine Sende-/Empfangseinrichtung der Haupt-Server-Einheit 20, die eine erste Sendeeinheit TX 201 und eine erste Empfangseinheit RX 202 umfasst, auf. Ferner enthält die Haupt-Server-Einheit 2 eine Steuereinrichtung der Haupt-Server-Einheit 21, die über eine Datenverbindung der Haupt-Server-Einheit 22 an die Sende-/Empfangseinrichtung der Haupt-Server-Einheit 20 angeschlossen ist. Die Ersatz-Server-Einheit 3 weist eine Sende-/Empfangseinrichtung der Ersatz-Server-Einheit 30, die eine zweite Sendeeinheit TX 301 und eine zweite Empfangseinheit RX 302 umfasst, auf. Weiterhin enthält die Ersatz-Server-Einheit 3 eine Steuereinrichtung der Ersatz-Server-Einheit 31, die über eine Datenverbindung der Ersatz-Server-Einheit 32 an die Sende-/Empfangseinrichtung der Ersatz-Server-Einheit 30 angeschlossen ist.

Der Verteiler 4 weist eine Haupt-Server-Sende-/Empfangseinrichtung 40, die eine dritte Sendeeinheit TX 401 und eine dritte Empfangseinheit RX 402 umfasst, eine Ersatz-Server-Sende-/Empfangseinrichtung 41, die eine vierte Sendeeinheit TX 411 und eine vierte Empfangseinheit RX 412 umfasst, und eine Client-Sende-/Empfangseinrichtung 42, die eine fünfte Sendeeinheit TX 421 und eine fünfte Empfangseinheit RX 422 umfasst, auf. Ferner ist eine Vermittlungseinrichtung 43 vorgesehen, die über eine interne Datenverbindung des Verteilers 4 an die Haupt-Server-Sende-/Empfangseinrichtung 40, die Ersatz-Server-Sende-/Empfangseinrichtung 41 und die Client-Sende-/Empfangseinrichtung 42 angeschlossen ist.

Die Haupt-Server-Einheit 2, die Ersatz-Server-Einheit 3 und die Verteiler 4 sind in Fig. 2 als getrennte Bauteile ausgebildet. Es besteht jedoch auch die Möglichkeit, die Ersatz-Server-Einheit 3 und den Verteiler 4 in ein einzelnes Bauteil zu integrieren, wobei die Steuereinrichtung der Ersatz-Server-Einheit 31 und die Vermittlungseinrichtung 43 des Verteilers 4 dann über eine interne Datenverbindung direkt miteinander verbunden sind (nicht dargestellt).

Der Feldbus 1 des Automatisierungssystems umfasst einen Client-Feldbus 6. Der Client-Feldbus 6 besitzt zwei unidirektionale Kommunikationspfade, die als erster Kommunikationspfad 61 und zweiter Kommunikationspfad 62 bezeichnet sind. Der Client-Feldbus 6 verbindet den Verteiler 4 und die erste Client-Einheiten 5-1, die zweite Client-Einheit 5-2, ..., die n-te Client-Einheit 5-N seriell miteinander. Der Verteiler 4 ist dabei über die fünfte Sendeeinheit TX 421 der Client-Sende-/Empfangseinrichtung 42 an den ersten Kommunikationspfad 61 als Telegramm-Auskoppelstelle und über die fünfte Empfangseinheit RX 422 der Client-Sende-/Empfangseinrichtung 42 an den zweiten Kommunikationspfad 62 als Telegramm-Einkoppelstelle angeschlossen.

Die Sende-/Empfangseinrichtung der Haupt-Server-Einheit 20 ist über einen Haupt-Datenbus 7 an die Haupt-Server-Sende-/Empfangseinrichtung 40 des Verteilers 4 angeschlossen. Dabei ist die erste Sendeeinheit TX 201 der Sende-/Empfangseinrichtung der Haupt-Server-Einheit 20 über einen ersten unidirektionalen Kommunikationspfad 71 mit der dritten Empfangseinheit RX 402 der Haupt-Server-Sende-/Empfangseinrichtung 40 des Verteilers 4 verbunden. Ferner ist die erste Empfangseinheit RX 202 der Sende-/Empfangseinrichtung der Haupt-Server-Einheit 20 über einen zweiten unidirektionalen Kommunikationspfad 72 mit der dritte Sendeeinheit TX 401 der Haupt-Server-Sende-/Empfangseinrichtung 40 des Verteilers 4 verbunden.

Die Sende-/Empfangseinrichtung der Ersatz-Server-Einheit 30 ist über einen Ersatz-Datenbus 8 an die Ersatz-Server-Sende-/Empfangseinrichtung 41 des Verteilers 4 angeschlossen. Dabei ist die zweite Emfangseinheit RX 302 der Sende-/Empfangseinrichtung der Ersatz-Server-Einheit 30 über einen dritten unidirektionalen Kommunikationspfad 81 mit der vierten Sendeeinheit TX 412 der Ersatz-Server-Sende-/Empfangseinrichtung 41 des Verteilers 4 verbunden. Ferner ist die zweite Sendeeinheit TX 301 der Sende-/Empfangseinrichtung der Ersatz-Server-Einheit 30 über einen vierten unidirektionalen Kommunikationspfad 82 mit der Empfangseinheit RX 411 der Ersatz-Server-Sende-/Empfangseinrichtung 41 des Verteilers 4 verbunden.

Der Haupt-Datenbus 7 und der Ersatz-Datenbus 8 können jeweils als Abzweigung des Client-Feldbusses 6 ausgeführt sein, der ringförmig den Verteiler 4 nacheinander mit der ersten Client-Einheit 5-1, der zweiten Client-Einheit 5-2, ..., der n-ten Client-Einheit 5-N und dann wieder mit dem Verteiler 4 verbindet, wobei der erste Kommunikationspfad 61 und der zweite Kommunikationspfad 62 des Client-Feldbusses 6 gegenläufig betrieben werden.

Die erste Client-Einheit 5-1, die zweite Client-Einheit 5-2, ..., die n-te Client-Einheit 5-N besitzen alle den gleichen Aufbau. Exemplarisch wird die Struktur einer Client-Einheit 5 erläutert. Die Client-Einheit 5 weist vom Verteiler 4 aus betrachtet zum Anschluss an einen vorherigen Busteilnehmer eine erste Sende-/Empfangseinrichtung 50 und zum Anschluss an den nächsten Busteilnehmer eine zweite Sende-/Empfangseinrichtung 51 auf.

Die erste Sende-/Empfangseinrichtung 50 der Client-Einheit 5 umfasst eine sechste Sendeeinheit TX 501 und eine sechste Empfangseinheit RX 502, wobei die sechste Sendeeinheit TX 501 der ersten Sende-/Empfangseinrichtung 50 mit dem zweiten Kommunikationspfad 62 und die sechste Empfangseinheit RX 502 der ersten Sende-/Empfangseinrichtung 50 mit dem ersten Kommunikationspfad 61 verbunden ist.

Die zweite Sende-/Empfangseinrichtung 51 der Client-Einheit 5 umfasst eine siebte Sendeeinheit TX 511 und eine siebte Empfangseinheit RX 512, wobei die siebte Sendeeinheit TX 511 der zweiten Sende-/Empfangseinrichtung 51 mit dem ersten Kommunikationspfad 61 und die siebte Empfangseinheit RX 512 der zweiten Sende-/Empfangseinrichtung 51 mit dem zweiten Kommunikationspfad 62 verbunden ist. Zwischen der ersten Sende-/Empfangseinrichtung 50 und der zweiten Sende-/Empfangseinrichtung 51 ist eine Verarbeitungseinrichtung 52 geschaltet, die über eine interne Datenverbindung 53 der Client-Einheit 5 angeschlossen ist.

Die Verarbeitungseinheit 52 der Client-Einheit 5 ist ausgelegt, um zwischen der ersten Sende-/Empfangseinrichtung 50 und der zweiten Sende-/Empfangseinrichtung 51 über die interne Datenverbindung 53 der Client-Einheit 5 ausgetauschte Telegramme zu verarbeiten. Die Telegramm-Verarbeitung erfolgt beim Telegramm-Durchlauf auf dem ersten Kommunikationspfad 61 des weiteres Feldbusses 6.

Die fünfte Sendeeinheit TX 421 der Client-Sende-/Empfangseinrichtung 42 des Verteilers 4 am ersten Kommunikationspfad 61 des weiteren Feldbusses 6 dient als Telegramm-Auskoppelstelle. Das Telegramm durchläuft auf dem ersten Kommunikationspfad 61 des weiteren Feldbusses 6 nacheinander die daran angeschlossenen erste Client-Einheit 5-1, zweite Client-Einheit 5-2, ..., n-te Client-Einheit 5-N. Die Verarbeitungseinheit 52 der Client-Einheiten, die zwischen die sechste Empfangseinheit RX 502 der ersten Sende-/Empfangseinrichtung 50 und die sechste Sendeeinheit TX 501 der zweiten Sende-/Empfangseinrichtung 51 geschaltet ist, verarbeitet dabei das Telegramm beim Durchlauf durch die Client-Einheit.

Nachdem das Telegramm die n-te Client-Einheit 5-N durchlaufen hat und verarbeitet wurde, wird das verarbeitete Telegramm über den zweiten Kommunikationspfad 62 des Client-Feldbusses 6 auf die fünfte Empfangseinheit RX 422 der Client-Sende-/Empfangseinrichtung 42 des Verteilers 4, die als Telegramm-Einkoppelstelle dient, zurückgekoppelt. Dabei durchläuft das verarbeitete Telegramm auf dem zweiten Kommunikationspfad 62 nacheinander in umgekehrter Reihenfolge die Client-Einheiten, das heißt, die n-te Client-Einheit 5-N, ..., die zweite Client-Einheit 5-2 und die erste Client-Einheit 5-1, wobei das Telegramm von der Verarbeitungseinheit 52 der X-te Client-Einheit 5-X nur verstärkt, aber nicht verarbeitet wird.

Das Automatisierungssystem wird im Normal-Betriebsmodus von der Haupt-Server-Einheit 2 gesteuert. Im Ausfall-Betriebsmodus wird die Steuerung von der Ersatz-Server-Einheit 3 übernommen. Im Rahmen einer Steuerungsaufgabe erzeugt die Steuereinrichtung der jeweiligen Server-Einheit, im Normal-Betriebsmodus die Steuereinrichtung der Haupt-Server-Einheit 21 und im Ersatz-Betriebsmodus die Steuereinrichtung der Ersatz-Server-Einheit 31, Telegramme.

Die Steuereinrichtung der Haupt-Server-Einheit 21 ist ausgelegt, Normal-Telegramme zu erzeugen, die jeweils einen Steuerdatenblock, der in einen Header-Abschnitt und einen Trailer-Abschnitt aufgeteilt sein kann, und einen Nutzdatenblock umfassen. Die Steuereinrichtung der Ersatz-Server-Einheit 31 ist ausgelegt, Ausfall-Telegramme zu erzeugen, die jeweils einen Steuerdatenblock aufweisen, der dem Steuerdatenblock der Normal-Telegramme gleicht, aber einen gegenüber dem Nutzdatenblock der Normal-Telegramme veränderten Nutzdatenblock umfassen.

In den Ausfall-Telegrammen ist die vorgegebene Nutzdatenstruktur der Normal-Telegramme in relevante Datenelemente und optionale Datenelemente unterteilt, wobei die Ersatz-Server-Einheit 3 ausgelegt ist, für die relevanten Datenelemente des ersten Ausfall-Telegramms die Datenwerte der relevanten Datenelemente des aktuell vorliegenden Normal-Telegramms und für die optionalen Datenelemente des ersten Ausfall-Telegramme vorgegebenen Default-Datenwerte zu verwenden.

Die Sende-/Empfangseinrichtung der Haupt-Server-Einheit 20 sendet im Normal-Betriebsmodus die Normal-Telegramme über den Haupt-Datenbus 7 zur Haupt-Server-Sende-/Empfangseinrichtung 40 des Verteilers 4. Eine in der Vermittlungseinrichtung 43 des Verteilers 4 festgelegte Normal-Betriebsmodus-Vermittlungsregel leitet von der Haupt-Server-Sende-/Empfangseinrichtung 40 empfangene Normal-Telegramme dann zur Client-Sende-/Empfangseinrichtung 42 weiter, um die Normal-Telegramme auf dem ersten Kommunikationspfad 61 des Client-Feldbusses 6 auszugeben.

Ferner routet die Vermittlungseinrichtung 43 des Verteilers 4 im Normal-Betriebsmodus mit Hilfe der Normal-Betriebsmodus-Vermittlungsregel die von der Client-Sende-/Empfangseinrichtung 42 auf dem zweiten Kommunikationspfad 62 des Client-Feldbusses 6 empfangenen rückgekoppelten verarbeiteten Normal-Telegramme zur Haupt-Server-Sende-/Empfangseinrichtung 40 des Verteilers 4. Die Haupt-Server-Sende-/Empfangseinrichtung 40 des Verteilers 4 sendet die rückgekoppelten verarbeiteten Normal-Telegramme dann über den Haupt-Datenbus 7 zur Sende-/Empfangseinrichtung der Haupt-Server-Einheit 20.

Zusätzlich leitet die in der Vermittlungseinrichtung 43 des Verteilers 4 festgelegte Normal-Betriebsmodus-Vermittlungsregel von der Haupt-Server-Sende-/Empfangseinrichtung 40 empfangene Normal-Telegramme und von der Client-Sende-/Empfangseinrichtung 42 empfangene rückgekoppelte verarbeitete Normal-Telegramme zur Ersatz-Server-Sende-/Empfangseinrichtung 41 des Verteilers 4. Die Ersatz-Server-Sende-/Empfangseinrichtung 41 des Verteilers 4 sendet dann die Normal-Telegramme über den Ersatz-Datenbus 8 zur Sende-/Empfangseinrichtung der Ersatz-Server-Einheit 303.

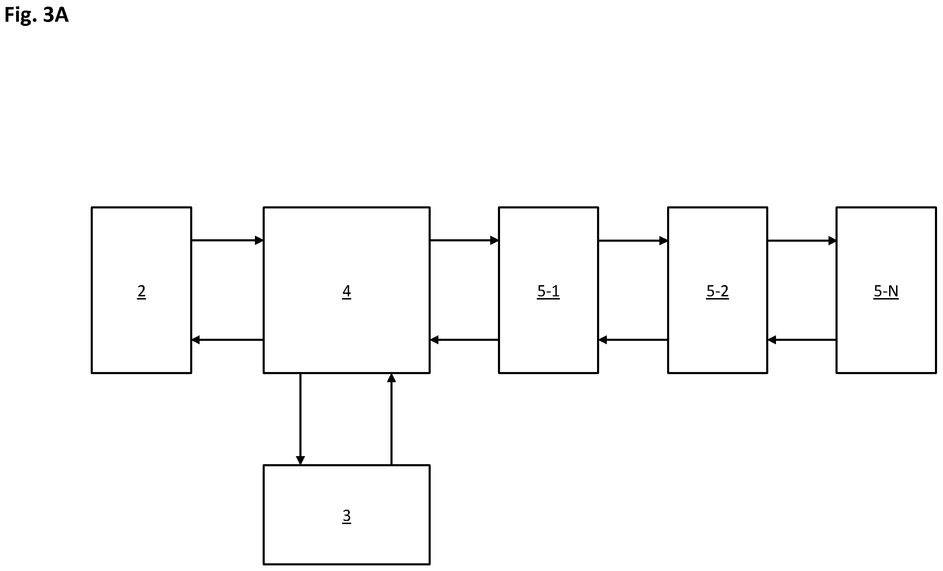

Fig. 3A zeigt den beschriebenen Normal-Betriebsmodus im Automatisierungssystem aus Fig. 2, wobei die Normal-Telegramm-Übertragungsrichtung in den Kommunikationspfaden durch Pfeile angezeigt ist.

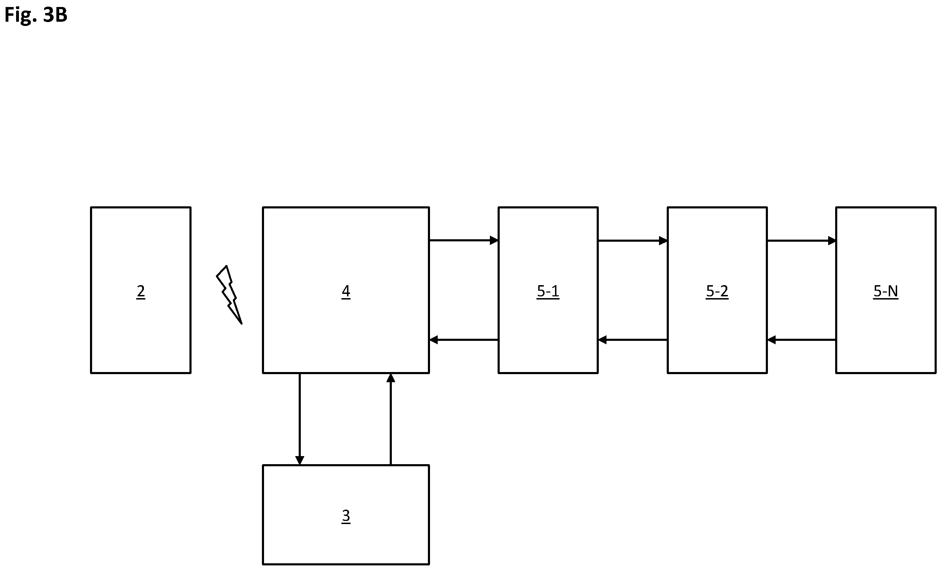

Fig. 3B zeigt den beschriebenen Ausfall-Betriebsmodus im Automatisierungssystem aus Fig. 2, wobei die Ausfall-Telegramm-Übertragungsrichtung in den Kommunikationspfaden durch Pfeile angezeigt ist.

In einem Ausfall-Betriebsmodus leitet die in der Vermittlungseinrichtung 43 des Verteilers 4 festgelegte Ausfall-Betriebsmodus-Vermittlungsregel von der Ersatz-Server-Sende-/Empfangseinrichtung 41 empfangene Ausfall-Telegramme zur Client-Sende-/Empfangseinrichtung 42 weiter. Ferner leitet die Vermittlungseinrichtung 43 des Verteilers 4 von der Client-Sende-/Empfangseinrichtung 42 empfangene rückgekoppelte verarbeitete Ausfall-Telegramme zur Ersatz-Server-Sende-/Empfangseinrichtung 41 weiter. Die Ersatz-Server-Sende-/Empfangseinrichtung 41 des Verteilers 4 sendet dann die Ausfall-Telegramme über den Ersatz-Datenbus 8 zur Sende-/Empfangseinrichtung der Ersatz-Server-Einheit 30.3

Der Verteiler 4 sorgt so dafür, dass unabhängig davon, ob die Telegramme im Automatisierungssystem von der Haupt-Server-Einheit 2 oder der Ersatz-Server-Einheit 3 erzeugt werden, die Telegramme im Datenbus umlaufen und dabei von allen am Client-Feldbus 6 angeschlossenen Client-Einheiten verarbeitet werden.

Die Neukonfiguration der Telegrammübertragung beim Umschalten von der Haupt-Server-Einheit 2 zur Ersatz-Server-Einheit 3 bei Ausfall der Haupt-Server-Einheit 2 erfolgt automatisch in Echtzeit.

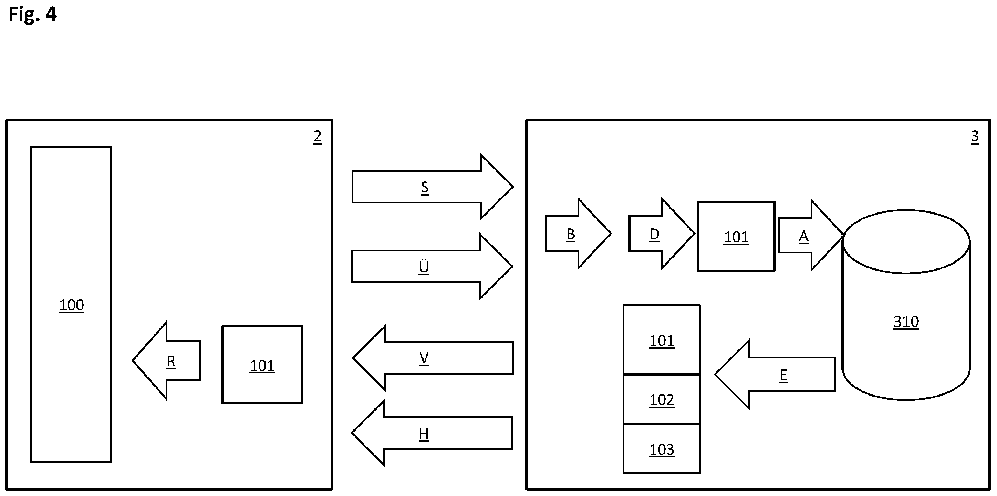

Fig.4 zeigt ein Ablaufschema beim Wechsel zwischen Normal-Betriebsmodus und Ausfall-Betriebsmodus bei dem in Fig. 1 gezeigten Automatisierungssystem. Im Weiteren wird davon ausgegangen, dass auf dem Feldbus 1 das Ethernet-Protokoll genutzt wird, wobei der Datenaustausch mit den Telegrammen in den Client-Einheiten 5 im Durchlauf erfolgt. Es können grundsätzlich jedoch andere Feldbus-Konzept für den Telegrammverkehr genutzt werden.

Im Normal-Betriebsmodus führt die Haupt-Server-Einheit 2 zyklisch Steuerungsaufgaben durch, um auf der Grundlage von Eingangsdaten der Client-Einheiten 5 Ausgangsdaten für die Client-Einheiten 5 zu erzeugen. Die Haupt-Server-Einheit 2 verschickt dabei nach Abschluss eines Steuerprozesszyklus die auf der Grundlage von Eingangsdaten der Client-Einheiten 5 erzeugten Ausgangsdaten als Normal-Telegramme auf dem Feldbus 1 an die Client-Einheiten 5. Die von der Haupt-Server-Einheit 2 erzeugten Normal-Telegramme besitzen dabei jeweils eine Nutzdatenstruktur 100.

Die Client-Einheiten 5 entnehmen den auf dem Feldbus 1 von der Haupt-Server-Einheit 2 verschickten Normal-Telegrammen die der jeweiligen Client-Einheit 5 zugeordneten Ausgangsdaten, um mit den Ausgangsdaten einen lokalen Client-Einheit-Prozess auszuführen. Die im lokalen Client-Einheit-Prozess ermittelten Daten werden dann von der Client-Einheit 5 in die auf dem Feldbus 1 umlaufenden Normal-Telegramme in dafür vorgesehene Bereiche eingetragen und an die Haupt-Server-Einheit 2 rückübertragen. Die Haupt-Server-Einheit 2 nutzt dann die übertragenen Daten als Eingangsdaten für den nächsten Steuerprozesszyklus.

Im Normal-Betriebsmodus wird weiter ein Synchronisierungsschritt S ausgeführt, mit dem sämtliche Normal-Telegramme des Normal-Telegrammverkehrs kontinuierlich an die Ersatz-Server-Einheit 3 gespiegelt werden. Die Ersatz-Server-Einheit 3 empfängt alle zwischen der Haupt-Server-Einheit 2 und den Client-Einheiten 5 ausgetauschten Normal-Telegramme mit der vorgegebenen Nutzdatenstruktur 100.

Ferner wird im Normal-Betriebsmodus fortlaufend ein Überwachungsschritt Ü ausgeführt, um einen Ausfall der Haupt-Server-Einheit 2 festzustellen. Die Bewertung, ob ein Ausfall vorliegt, erfolgt in einem Bewertungsschritt B durch die Ersatz-Server-Einheit 3. Vorgänge, die in dem Bewertungsschritt B durch die Ersatz-Server-Einheit 3 als Ausfall der Haupt-Server-Einheit 2 bewertet werden, können externe Vorgänge und/ oder interne Vorgänge in Zusammenhang mit der Haupt-Server-Einheit 2 sein.

Die externen Vorgänge zum Auslösen des Ausfall-Betriebsmodus werden dabei von der Ersatz-Server-Einheit 3 in dem Bewertungsschritt B ohne Mithilfe der Haupt-Server-Einheit 2 ermittelt. Bei internen Vorgängen zum Auslösen des Ausfall-Betriebsmodus übermittelt die Haupt-Server-Einheit 2 Informationen, die dann von der Ersatz-Server-Einheit 3 in dem Bewertungsschritt B genutzt werden, um einen Ausfall-Betriebsmodus der Ersatz-Server-Einheit 3 zu triggern.

Bei der Haupt-Server-Einheit 2 kann aber nicht nur ein Ausfall, sondern zusätzlich auch der aktuelle Zustand der Steuerungsaufgabe in dem Überwachungsschritt Ü überwacht und dann in dem Bewertungsschritt B durch die Ersatz-Server-Einheit 3 bewertet werden.

Falls im dem Bewertungsschritt B der Ausfall-Betriebsmodus aufgrund eines externen oder internen Vorgangs getriggert wird, ohne dass die Kontrolle des Telegrammverkehrs durch die Haupt-Server-Einheit 2 unterbrochen ist, wird der der Normal-Betriebsmodus die Haupt-Server-Einheit 2 abgeschaltet, um zu verhindern, dass im Weiteren neben der Ersatz-Server-Einheit 3 auch die Haupt-Server-Einheit 2 auf den Feldbus 1 zugreift.

Wird ein Ausfall der Haupt-Server-Einheit 2 in einem Bewertungsschritt B durch die Ersatz-Server-Einheit 3 erkannt, wird von der Ersatz-Server-Einheit 3 ein Datenreduktionschritt D ausgeführt. In dem Datenreduktionschritt D wird von der Ersatz-Server-Einheit 3 eine weitere Nutzdatenstruktur 101 erzeugt, die die für einen Ausfall-Betriebsmodus notwendigen relevanten Datenelemente der Nutzdatenstruktur 100 der Normal-Telegramme enthält. Die weiteren optionalen Datenelemente der Nutzdatenstruktur 100 der Normal-Telegramme werden verworfen.

Die Datenreduktion, die relevante Datenelemente der Nutzdatenstruktur 100 der Normal-Telegramme in der weiteren Nutzdatenstruktur 101 bestimmt, wird von der Ersatz-Server-Einheit 3 ausgeführt. Dabei ist in der Ersatz-Server-Einheit 3 festgelegt, welche Datenelemente der Nutzdatenstruktur 100 der Normal-Telegramme relevante und welche Datenelemente optionale Datenelemente sind. In einem Initialisierungsvorgang wird der Ersatz-Server-Einheit 3 vorab für verschiedene Zustände der Steuerungsaufgabe vorgegeben, welche Datenelemente in der Nutzdatenstruktur 100 der Normal-Telegramme relevante Datenelemente und welche Datenelemente optionale Datenelemente sind.

Den Zustand der Steuerungsaufgabe und damit der Maschine, auf der die Steuerungsaufgabe ausgeführt wird, kann die Ersatz-Server-Einheit 3 im Rahmen des Datenreduktionschritts D auf der Grundlage der Datenwerte der relevante Datenelemente des aktuell vorliegenden Normal-Telegramms bestimmen.

Es besteht jedoch auch die Möglichkeit, dass der Zustand der Steuerungsaufgabe von der Haupt-Server-Einheit 2 kontinuierlich in die Nutzdatenstruktur 100 der Normal-Telegramme eingeschrieben und mit den gespiegelten Normal-Telegrammen des Normal-Telegrammverkehrs an die Ersatz-Server-Einheit 3 übermittelt wird. Der Zustand der Steuerungsaufgabe kann dabei als Datenelement beispielsweise in Form eines Zahlenwerts oder einer Enumeration in der Nutzdatenstruktur 100 der Normal-Telegramme abgespeichert sein. In diesem Fall kann die Ersatz-Server-Einheit 3 auf einfache Weise den Zustand der Steuerungsaufgabe und damit der Maschine, auf der die Steuerungsaufgabe ausgeführt wird, bestimmen.

Ferner kann der Zustand der Steuerungsaufgabe von Ersatz-Server-Einheit 3 im Rahmen des Datenreduktionschritts D auch auf der Grundlage einer Kombination aus einer Auswertung der Datenwerte der relevanten Datenelemente des aktuell vorliegenden Normal-Telegramms und der fortlaufend von der Haupt-Server-Einheit 2 an die Ersatz-Server-Einheit 3 übermittelten Zustandsinformation ermittelt werden.

Anhand des von der Ersatz-Server-Einheit 3 im Rahmen des Datenreduktionschritts D bestimmten Zustandes der Steuerungsaufgabe wird aus einem Repository 310 ein Ausfall-Betriebsmodus aus einer Mehrzahl von Ausfall-Betriebsmodi im Rahmen eines Auswahlschrittes A ausgewählt.

Für den ausgewählten Ausfall-Betriebsmodus wird ein zugeordneter Satz von Default-Werten verwendet, um die von der Ersatz-Server-Einheit 3 verworfenen optionalen Datenelemente in den Ausfall-Telegrammen zu ersetzen. Im Ausfall-Betriebsmodus werden von der Ersatz-Server-Einheit 3 in der Regel weniger Sensoren und Aktoren der Maschine genutzt, um beispielsweise eine kleinere Server-Einheit und/oder einen einfachen bzw. robusten Steuerprogrammcode einsetzen zu können. Die Default-Werte ermöglichen es, im Ausfall-Betriebsmodus auch Sensoren bzw. Aktoren der Maschine in das Prozessabbild einzubinden, die von der Ersatz-Server-Einheit 3 nicht genutzt werden. Die von der Ersatz-Server-Einheit 3 bereitgestellten Ausfall-Telegramme müssen ferner auch die gleiche Telegrammlänge wie die Normal-Telegramme besitzen, um den Telegrammverkehr auf dem Feldbus 1 ausführen zu können.

Im Ausfall-Betriebsmodus wird die Steuerung dann von der Ersatz-Server-Einheit 3 übernommen. Im Rahmen eines Ersatz-Steuerungsvorgangs E erzeugt die Ersatz-Server-Einheit 3 Ausfall-Telegramme. Im ersten Ausfall-Telegramm werden für die relevanten Datenelemente die Datenwerte der relevante Datenelemente des aktuell vorliegenden Normal-Telegramms und für die optionalen Datenelemente vorgegebene Default-Datenwerte verwendet. Die Ausfall-Telegramme umfassen so die weitere Nutzdatenstruktur 101 und eine Default-Datenstruktur 102. Zusätzlich kann in den Ausfall-Telegrammen auch eine weitere Datenstruktur 103 mit Datenelementen für lokale Ergebnisse des Ausfall-Betriebsmodus vorgesehen sein.

Die Client-Einheiten 5 entnehmen den auf dem Feldbus 1 von der Ersatz-Server-Einheit 3 verschickten Ausfall-Telegrammen die der jeweiligen Client-Einheit 5 zugeordneten Ausgangsdaten der weiteren Nutzdatenstruktur 101 und ggfs. der weiteren Datenstruktur 103, um mit den Ausgangsdaten einen lokalen Client-Einheit-Prozess auszuführen. Die im lokalen Client-Einheit-Prozess ermittelten Daten werden dann von den Client-Einheiten 5 in die auf dem Feldbus 1 umlaufenden Ausfall-Telegramme in dafür vorgesehene Bereiche eingetragen und an die Ersatz-Server-Einheit 3 rückübertragen. Die Ersatz-Server-Einheit 3 nutzt dann die übertragenen Daten als Eingangsdaten für den nächsten Ausfall-Steuerprozesszyklus.

Parallel zum Steuern der Maschine im Ausfall-Betriebsmodus wird von der Ersatz-Server-Einheit 3 in einem Verfügbarkeitsschritt V ferner überwacht, ob die Haupt-Server-Einheit 2 wieder betriebsbereit ist und zusätzlich auch signalisiert, dass der Normal-Betriebsmodus für die Maschine wieder aufgenommen werden kann.

Wenn die Ersatz-Server-Einheit 3 im Verfügbarkeitsschritt V die Betriebsbereitschaft der Haupt-Server-Einheit 2 feststellt, übermittelt die Ersatz-Server-Einheit 3 dann kontinuierlich die relevanten Datenelemente der weiteren Nutzdatenstruktur 101 der Ausfall-Telegramme an die Haupt-Server-Einheit 2 in einem Hand-over-Schritt H, auch wenn die Haupt-Server-Einheit 2 nicht verfügbar ist.

Wenn die Haupt-Server-Einheit 2 auch signalisiert, dass der Normal-Betriebsmodus für die Maschine wieder aufgenommen werden kann, wird dann ein Restart-Schritt R durch die Haupt-Server-Einheit 2 ausgeführt. Der Restart-Schritt R kann sowohl von extern beispielsweise durch das Bedienpersonal ausgelöst werden. Alternativ kann der Restart-Schritt R auch intern, beispielsweise von der Ersatz-Server-Einheit 3, getriggert werden. Der Normal-Betriebsmodus durch die Haupt-Server-Einheit 2 wird anschließend wieder aufgenommen. In der Nutzdatenstruktur 100 des ersten Normal-Telegramms können dabei für die optionalen Datenelemente der Default-Datenstruktur 102 der Ausfall-Telegramme weitere Default-Werte, die der Haupt-Server-Einheit 2 vorgeben sind, und/ oder die zuletzt bekannten Datenwerte aus dem Normal-Betriebsmodus verwendet werden.

Als konkretes Ausführungsbeispiel wird eine 2-Achsen-Maschine betrachtet, deren erste und zweite Achsen über Software gekoppelt sind und die sich mechanisch durch ein Ineinanderfahren zerstören würden, wenn die beiden Achsen nicht zu jeder Zeit koordiniert werden. Die Ersatz-Server-Einheit 3 kann dann im Falle eines Ausfalls der Haupt-Server-Einheit 2 im Ausfall-Betriebsmodus beispielsweise ein Runterfahren der Maschine ausführen.

Die Auswahl des Ausfall-Betriebsmodus erfolgt über eine Zustandsinformation "Einfacher Zustand", die kontinuierlich als Teil der Normal-Telegramme von der Haupt-Server-Einheit 2 an die Ersatz-Server-Einheit 3 im Rahmen des Synchronisierungsschritts S geliefert wird.

Wenn ein Ausfall der Haupt-Server-Einheit 2 von der Ersatz-Server-Einheit 3 im Rahmen des Überwachungsschritts Ü und des Bewertungsschritts B erkannt wird, verwirft die Ersatz-Server-Einheit 3 im Datenreduktionsschritt D dann nicht relevante Werte, wie beispielsweise die Temperaturwerte der Maschine. Die Datenreduktion behält als weitere Nutzdatenstruktur insbesondere die Zustandsinformation "Einfacher Zustand" und alle relevanten Werte über die Achsen, Kopplungszustand, Geschwindigkeit und Position.

Anschließend wird dann im Auswahlschritt A das Repository 310 nach einem geeigneten Ausfall-Betriebsmodus gescannt. Die Zustandsinformation "Einfacher Zustand" hat dabei den Wert "Produktion" und die relevanten Werte sind, "die erste und zweite Achse sind gekoppelt" und "die erste Achse hat eine Position zwischen 100-200". Aus dem Repository 310 wird als Ausfall-Betriebsmodus die Fahrweise "Entkoppeln-und-Ausschalten" für die Ersatz-Server-Einheit 3 ausgewählt.

Da Temperatur-Messwerte und Temperatur-Stellwerte der Kühlelemente beim Ausfall-Betriebsmodus "Entkoppeln-und-Ausschalten" nicht mehr relevant sind, werden in den Prozessabbildern der Ausfall-Telegramme stattdessen Default-Werte "0" verwendet, die im Repository 310 zum Ausfall-Betriebsmodus "Entkoppeln-und-Ausschalten" hinterlegt sind.

Wenn beim Auswahlschritt A zur Bestimmung des geeigneten Ausfall-Betriebsmodus die Zustandsinformation "Einfacher Zustand" den Wert "Produktion" und die relevanten Werte sind, "die erste und zweite Achse sind nicht gekoppelt" und "die erste Achse hat eine Position zwischen 100-200", dann wird aus dem Repository 310 als Ausfall-Betriebsmodus die Fahrweise "Bremsen-und-Ausschalten" für die Ersatz-Server-Einheit 3 bestimmt.

Im Ausfall-Betriebsmodus "Bremsen-und-Ausschalten" werden die Kühlelemente in den Ausfall-Telegrammen mit einem festen Default-Wert, der im Repository 310 unter dem Ausfall-Betriebsmodus "Bremsen-und-Ausschalten" abgelegt ist, auf eine vorgegebene Temperatur gestellt, aber nicht mehr geregelt.

Wenn beim Auswahlschritt A zur Bestimmung des geeigneten Ausfall-Betriebsmodus die Zustandsinformation "Einfacher Zustand" dagegen den Wert "Warten-auf-Produktion" hat, dann wird aus dem Repository 310 als Ausfall-Betriebsmodus die Fahrweise "Einfach-Ausschalten" ausgewählt. Die relevanten Werte für die beiden Achsen bzw. deren Positionen werden hierbei nicht berücksichtigt. Wie beim Ausfall-Betriebsmodus "Entkoppeln-und-Ausschalten" werden beim Ausfall-Betriebsmodus "Einfach-Ausschalten" Temperaturwerte nicht betrachtet, d.h. mit dem Default-Werten 0 belegt.

Viele Prozesse dürfen im Falle des Ausfalls der Haupt-Server-Einheit 2 nicht einfach ausgeschaltet werden, sondern müssen in einen sicheren Betriebszustand gebracht werden, der eine Zerstörung der Maschine verhindert. Ein Beispiel hierfür ist ein Betonwerk, bei dem im Reaktor in jedem Fall im Rührbetrieb aufrechterhalten werden muss, da nach dem Aushärten des Betons der Reaktor unbrauchbar werden würde.

Im Normal-Betriebsmodus empfängt die Ersatz-Server-Einheit 3 alle zwischen der Haupt-Server-Einheit 2 und den Client-Einheiten 5 im Betonwerk ausgetauschten Normal-Telegramme. Wenn im Überwachungsschritt Ü und Bewertungsschritt B ein Ausfall der Haupt-Server-Einheit 2 durch die Ersatz-Server-Einheit 3 erkannt wird, wird von der Ersatz-Server-Einheit 3 ein Datenreduktionschritt D aufgeführt, bei der sämtliche Messwerte des Betonwerks bis auf den Füllstand verworfen werden.

Es ist für das Betonwerk dann nur ein Ausfall-Betriebsmodus "Notfallbetrieb" vorgesehen. Im Ersatz-Steuerungsvorgang E regelt die Ersatz-Server-Einheit 3 bei einem Reaktor-Füllstand "nicht leer" den Rührer auf eine konstante Geschwindigkeit. Ferner werden alle Ventile geschlossen und die Betriebsart "Manuell" eingestellt. Außerdem wird ein Alarm ausgelöst, der die Betriebsart "Manuell" anzeigt.

Es ist auch denkbar, dass die Ersatz-Server-Einheit 3 im Ausfall-Betriebsmodus eine Maschine in einer suboptimalen Weise beispielsweise mit weniger Durchsatz oder mit höherem Ausschuss weiter produzieren lässt, weil technologisch hochsensible Regelungsalgorithmen nur auf der Haupt-Server-Einheit 2 ausgeführt werden können, ggfs. auch weil hierfür spezielle Hardware benötigt wird. So kann die Haupt-Server-Einheit 2 eine Maschinensteuerung auf der Basis von Maschinellem Lernen ausführen. Auf der Ersatz-Server-Einheit 3 wird dann aber auf Maschinelles Lernen verzichtet und es erfolgt nur eine klassische Maschinensteuerung.

### Bezugszeichen

Feldbus
Haupt- Server-Einheit
Ersatz-Server-Einheit
Verteiler
Client-Einheit (einer Maschine)
Weiteres Feldbus
Haut-Datenbus
Ersatz-Datenbus
5-1 erste Client-Einheit
5-2 zweite Client-Einheit
5-X X-te Client-Einheit
5-N letzte Client-Einheit
20 Sende-/Empfangseinrichtung der Haupt-Server-Einheit
21 Steuereinrichtung der Haupt-Server-Einheit
22 Datenverbindung der Haupt-Server-Einheit
30 Sende-/Empfangseinrichtung der Ersatz-Server-Einheit
31 Steuereinrichtung der Ersatz-Server-Einheit
32 Datenverbindung der Ersatz-Server-Einheit
40 Haupt-Server-Sende-/Empfangseinrichtung
41 Ersatz-Server-Sende-/Empfangseinheit
42 Client-Sende-/Empfangseinrichtung
43 Vermittlungseinrichtung
44 Datenverbindung des Verteilers
50 erste Sende-/Empfangseinrichtung
51 zweite Sende-/Empfangseinrichtung
52 Verarbeitungseinrichtung
53 interne Datenverbindung der Client-Einheit
61 erste Kommunikationspfad
62 zweite Kommunikationspfad
71 erste unidirektionale Kommunikationspfad
72 zweite unidirektionale Kommunikationspfad
81 dritte unidirektionale Kommunikationspfad
82 vierte unidirektionale Kommunikationspfad
100 Nutzdatenstruktur
101 weitere Nutzdatenstruktur
102 Default-Datenstruktur
103 weitere Datenstruktur
201 erste Sendeeinheit TX
202 erste Empfangseinheit RX
301 zweite Sendeeinheit TX
302 zweite Empfangseinheit RX
310 Repository
401 dritte Sendeeinheit TX
402 dritte Empfangseinheit RX
411 vierte Sendeeinheit TX
412 vierte Empfangseinheit RX 421 fünfte Sendeeinheit TX
422 fünfte Empfangseinheit RX
501 sechste Sendeeinheit TX
502 sechste Empfangseinheit RX
511 siebte Sendeeinheit TX
512 siebte Empfangseinheit RX
S Synchronisierungsschritt
Ü Überwachungsschritt
A Auswahlschritt
B Bewertungsschritt
D Datenreduktionsschritt
E Ersatz-Steuerungsvogang
V Verfügbarkeitsschritt
R Restart-Schritt
H Handover-Schritt

## Patentansprüche

1. Automatisierungssystem mit
einer Mehrzahl von Busteilnehmern, die über einen Feldbus (1) miteinander verbunden sind, um Telegramme mit einer vorgegebenen Datenstruktur zwischen den Busteilnehmern auszutauschen,
wobei die Mehrzahl von Busteilnehmern eine Haupt-Server-Einheit (2), eine Ersatz-Server-Einheit (3) und wenigstens eine Client-Einheit (5) umfassen,
wobei in einem Normal-Betriebsmodus die Haupt-Server-Einheit (2) und die Client-Einheit (5) Normal-Telegramme mit einer vorgegebenen Nutzdatenstruktur austauschen,
wobei die Ersatz-Server-Einheit (3) ausgelegt ist, die zwischen der Haupt-Server-Einheit (2) und der Client-Einheit (5) ausgetauschten Normal-Telegramme zu empfangen,
wobei die Funktionsfähigkeit der Haupt-Server-Einheit (2) fortlaufend überwacht wird und dann, wenn ein Ausfallereignis der Haupt-Server-Einheit (2) erkannt wird, die Ersatz-Server-Einheit (3) ausgelegt ist, einen Ausfall-Betriebsmodus zu aktivieren,
wobei in dem Ausfall-Betriebsmodus die Ersatz-Server-Einheit (3) und die Client-Einheit (5) Ausfall-Telegramme austauschen,
**dadurch gekennzeichnet, dass**
in den Ausfall-Telegrammen die vorgegebene Nutzdatenstruktur der Normal-Telegramme in relevante Datenelemente und optionale Datenelemente unterteilt ist, und
die Ersatz-Server-Einheit (3) ausgelegt ist, für die relevanten Datenelemente des ersten Ausfall-Telegramms die Datenwerte der relevante Datenelemente des aktuell vorliegenden Normal-Telegramms und für die optionalen Datenelemente des ersten Ausfall-Telegramms vorgegebene Default-Datenwerte zu verwenden.

2. Automatisierungssystem nach Anspruch 1, wobei die Client-Einheit (5) im Ausfall-Betriebsmodus einen gegenüber dem Normal-Betriebsmodus veränderten Funktionsumfang aufweist.

3. Automatisierungssystem nach Anspruch 2, wobei der Funktionsumfang der Client-Einheit (5) in dem Ausfall-Betriebsmodus einen abgesicherten Zustand der Client-Einheit (5) bereitstellt.

4. Automatisierungssystem nach einem der Ansprüche 1 bis 3, wobei ein Steuerprogrammcode der Ersatz-Server-Einheit (3) sich wenigstens in Teilen von einem Steuerprogrammcode der Haupt-Server-Einheit (2) unterscheidet.

5. Automatisierungssystem nach einem der Ansprüche 1 bis 4, wobei die Ersatz-Server-Einheit (3) ein Repository (310) mit einer Mehrzahl von Ausfall-Betriebsmodi aufweist, wobei die Ersatz-Server-Einheit (3) ausgelegt ist, beim Aktivieren des Ausfall-Betriebsmodus den Ausfall-Betriebsmodus aus der Mehrzahl von Ausfall-Betriebsmodi auf der Grundlage der Datenwerte der relevanten Datenelemente des aktuell vorliegenden Normal-Telegramms und/ oder einer fortlaufend von der Haupt-Server-Einheit (2) an die Ersatz-Server-Einheit (3) übermittelten Zustandsinformation auszuwählen.

6. Automatisierungssystem nach einem der Ansprüche 1 bis 5,
wobei, wenn die Ersatz-Server-Einheit (3) nach dem Ausfall der Haupt-Server-Einheit (2) eine Wiederherstellung der Funktionsfähigkeit der Haupt-Server-Einheit (2) erkennt, die Ersatz-Server-Einheit (3) ausgelegt ist, der Haupt-Server-Einheit (2) die relevanten Datenelemente der Ausfall-Telegramme zu übermitteln.

7. Automatisierungssystem nach Anspruch 6, wobei zur Reaktivierung des Normal-Betriebsmodus die Haupt-Server-Einheit (2) ausgelegt ist, für ein erstes Normal-Telegramm die Datenwerte der relevanten Datenelemente des letzten von der Ersatz-Server-Einheit (3) übermittelten Ausfall-Telegramms zu verwenden.

8. Automatisierungssystem nach einem der Ansprüche 1 bis 7, wobei die Ersatz-Server-Einheit (3) ausgelegt ist, einen Ausfall der Haupt-Server-Einheit (2) bei einer vorgegebenen Abweichung im Verhalten und/oder vom Normalzustand der Haupt-Server-Einheit (2) anzunehmen.

## Claims

1. An automation system comprising
a plurality of bus subscribers which are connected to one another via a field bus (1) in order to exchange telegrams having a predetermined data structure between the bus subscribers, wherein the plurality of bus subscribers comprises a main server unit (2), a substitute server unit (3) and at least one client unit (5),
wherein in a normal operating mode, the main server unit (2) and the client unit (5) exchange normal telegrams having a predetermined user data structure,
wherein the substitute server unit (3) is embodied to receive the normal telegrams exchanged between the main server unit (2) and the client unit (5),
wherein the functionality of the main server unit (2) is continuously monitored and then, if a failure event of the main server unit (2) is detected, the substitute server unit (3) is embodied to activate a failure operating mode,
wherein in failure operating mode, the substitute server unit (3) and the client unit (5) exchange failure telegrams,
**characterized in that**
in the failure telegrams, the predetermined user data structure of the normal telegrams is divided up into relevant data elements and optional data elements, and
the substitute server unit (3) is embodied to use the data values of the relevant data elements of the currently present normal telegram for the relevant data elements of the first failure telegram and predetermined default data values for the optional data elements of the first failure telegram.

2. The automation system according to claim 1, wherein the client unit (5) comprises a modified functional scope in the failure operating mode compared to the normal operating mode.

3. The automation system according to claim 2, wherein the functional scope of the client unit (5) provides a secured state of the client unit (5) in the failure operating mode.

4. The automation system according to any one of claims 1 to 3, wherein a control program code of the substitute server unit (3) differs at least in parts from a control program code of the main server unit (2).

5. The automation system according to any one of claims 1 to 4, wherein the substitute server unit (3) comprises a repository (310) having a plurality of failure operating modes, wherein the substitute server unit (3) is embodied to select the failure operating mode from the plurality of failure operating modes based on the data values of the relevant data elements of the currently present normal telegram and/or of a status information continuously transmitted from the main server unit (2) to the substitute server unit (3) upon activation of the failure operating mode.

6. The automation system according to any one of claims 1 to 5,
wherein, when the substitute server unit (3) detects a restoration of operability of the main server unit (2) after the failure of the main server unit (2), the substitute server unit (3) is embodied to transmit the relevant data elements of the failure telegrams to the main server unit (2).

7. The automation system according to claim 6, wherein for reactivating the normal operating mode, the main server unit (2) is embodied to use the data values of the relevant data elements of the last failure telegram transmitted by the substitute server unit (3) for a first normal telegram.

8. The automation system according to any one of claims 1 to 7, wherein the substitute server unit (3) is embodied to assume a failure of the main server unit (2) in the event of a predetermined deviation in behavior and/or from the normal state of the main server unit (2).

## Revendications

1. Système d'automatisation comprenant une pluralité de participants au bus qui sont reliés entre eux par l'intermédiaire d'un bus de terrain (1) afin d'échanger des télégrammes ayant une structure de données prédéfinie entre les participants au bus,
la pluralité de participants au bus comprenant une unité serveur principale (2), une unité serveur de substitution (3) et au moins une unité cliente (5),
l'unité serveur principale (2) et l'unité cliente (5), dans un mode de fonctionnement normal, échangeant des télégrammes normaux avec une structure prédéfinie de données utilitaires,
l'unité serveur de substitution (3) étant conçue pour recevoir les télégrammes normaux échangés entre l'unité serveur principale (2) et l'unité cliente (5),
le fonctionnement de l'unité serveur principale (2) étant surveillé en continu et, lorsqu'une défaillance de l'unité serveur principale (2) est détectée, l'unité serveur de substitution (3) étant conçue pour activer un mode de fonctionnement de défaillance,
l'unité serveur de substitution (3) et l'unité cliente (5), dans le mode de fonctionnement de défaillance, échangeant des télégrammes de défaillance,
**caractérisé en ce que**
dans les télégrammes de défaillance, la structure de données utilitaires prédéfinie des télégrammes normaux est subdivisée en éléments de données pertinents et en éléments de données optionnels, et
l'unité serveur de substitution (3) est conçue pour utiliser, pour les éléments de données pertinents du premier télégramme de défaillance, les valeurs de données des éléments de données pertinents du télégramme normal actuellement présent et, pour les éléments de données optionnels du premier télégramme de défaillance, des valeurs de données par défaut prédéfinies.

2. Système d'automatisation selon la revendication 1, dans lequel l'unité cliente (5) présente, en mode de fonctionnement de défaillance, une étendue de fonctions modifiée par rapport au mode de fonctionnement normal.

3. Système d'automatisation selon la revendication 2, dans lequel l'étendue des fonctions de l'unité cliente (5) en mode de fonctionnement de défaillance assure un état sécurisé de l'unité cliente (5).

4. Système d'automatisation selon l'une des revendications 1 à 3, dans lequel un code de programme de commande de l'unité serveur de substitution (3) diffère au moins en partie d'un code de programme de commande de l'unité serveur principale (2).

5. Système d'automatisation selon l'une des revendications 1 à 4, dans lequel l'unité serveur de substitution (3) comprend un référentiel (310) avec une pluralité de modes de fonctionnement en cas de défaillance, l'unité serveur de substitution (3) étant conçue pour, lorsque le mode de fonctionnement de défaillance est activé, sélectionner le mode de fonctionnement de défaillance parmi la pluralité de modes de fonctionnement de défaillance sur la base des valeurs de données des éléments de données pertinents du télégramme normal actuellement présent et/ou d'une information d'état transmise en continu par l'unité serveur principale (2) à l'unité serveur de substitution (3).

6. Système d'automatisation selon l'une des revendications 1 à 5,
dans lequel, lorsque l'unité serveur de substitution (3) détecte une restauration de la fonctionnalité de l'unité serveur principale (2) après la défaillance de l'unité serveur principale (2), l'unité serveur de substitution (3) est conçue pour transmettre à l'unité serveur principale (2) les éléments de données pertinents des télégrammes de défaillance.

7. Système d'automatisation selon la revendication 6, dans lequel, pour réactiver le mode de fonctionnement normal, l'unité serveur principale (2) est conçue pour utiliser, pour un premier télégramme normal, les valeurs de données des éléments de données pertinents du dernier télégramme de défaillance transmis par l'unité serveur de substitution (3).

8. Système d'automatisation selon l'une des revendications 1 à 7, dans lequel l'unité serveur de substitution (3) est conçue pour supposer une défaillance de l'unité serveur principale (2) en cas d'écart prédéfini dans le comportement et/ou par rapport à l'état normal de l'unité serveur principale (2).
